# EUROPEAN PATENT APPLICATION

(11) **EP 4 579 186 A1**
(43) Date of publication of application: **02.07.2025**
(21) Application number: 23315491.3
(22) Date of filing: 27.12.2023
(51) Int. Cl.: G01C 15/06

(54) **SURVEYING POLE WITH OFFSET ELECTRONIC DISTANCE MEASUREMENT UNIT AND METHOD IMPLEMENTED IN A SURVEYING POLE**

(71) Applicant: Trimble Inc., Westminster, CO 80021 (US)
(72) Inventor: LEDANOIS, Pierre, 44474 Carquefou (FR); ZEIN EDDINE, Rachid, 44474 Carquefou (FR)
(74) Representative: AWA Sweden AB

(57) **Abstract**

A surveying pole comprising a pole arrangement extending along a longitudinal axis, comprising a first pole section and a second pole section telescopically arranged to provide length adjustment to the surveying pole, a target internally arranged in said pole arrangement, a top unit mounted on said pole arrangement extending along said axis, comprising a position device, an electronic distance measurement (EDM) unit configured to determine a distance to said target and arranged offset with respect to said axis such that at least a portion of a light path between said EDM unit and said target does not coincide with said axis within said top unit, and an optical arrangement adapted to redirect said light path such that it is parallel with said axis within said pole arrangement, and a processor configured to determine a length of the pole arrangement based on the distance determined by the EDM unit.

## Description

### Technical field

The present disclosure relates to a surveying pole and to a method implemented in a surveying pole. More specifically, it relates to determining a length of a pole arrangement of the surveying pole.

### Background

Surveying involves the determination of three-dimensional positions of points to map and create a model of the terrain or structure being surveyed. For this purpose, surveying poles having a target and/or other piece of surveying equipment, such as a GNSS (Global Navigation Satellite System) antenna, may be used. In use, a surveying pole is placed in contact with a measurement point. A surveying pole with a target is typically used in cooperation with a geodetic instrument, such as a geodetic scanner, a theodolite or a total station, to determine a distance and angle between the measurement point and the known position of the geodetic instrument. A surveying pole with a GNSS antenna may obtain its own position from signals received by satellites of the GNSS system. Thus, the position of the target and/or the GNSS antenna is obtained. For determination of the position of the measurement point, it is necessary to know the height of the target/antenna above the measurement point. For this purpose, an accurate measurement of the length of the surveying pole is needed. At the same time, it is always desirable to improve the ease of handling, both during operation and transport, of the surveying pole, in particular by minimizing the dimensions and weight of the surveying pole.

### Summary

In view of the above, an object of the present disclosure is to provide an improved surveying pole, enabling improved (e.g., accurate or at least more accurate) measurement of a length of the surveying pole, while reducing a weight of the same.

The invention is defined by the appended claims, with embodiments being set forth in the appended dependent claims, in the following description, and in the drawings.

According to a first aspect of the inventive concept, there is provided a surveying pole comprising a pole arrangement extending along a longitudinal axis between a first end and a second end. The pole arrangement comprises at least a first pole section and a second pole section telescopically arranged to provide length adjustment of said surveying pole.

The surveying pole further comprises a target, a top unit, and a processor. The target is internally arranged in the pole arrangement at a predetermined distance from the first end. The top unit is mounted on the pole arrangement at the second end and extends along the longitudinal axis. The top unit comprises a positioning device, an electronic distance measurement (EDM) unit, and an optical arrangement. The electronic distance measurement (EDM) unit is configured to determine a distance to said target, wherein said EDM unit is arranged offset with respect to the longitudinal axis such that at least a portion of a light path between the EDM unit and the target does not coincide with the longitudinal axis within the top unit. The optical arrangement is arranged between the EDM unit and the second end of the pole arrangement, and the optical arrangement is adapted to redirect the light path such that it is parallel with the longitudinal axis within the pole arrangement. The processor is configured to determine a length of the pole arrangement based on the distance determined by the EDM unit.

According to a second aspect of the invention, there is provided a method implemented in a surveying pole. The surveying pole comprises a pole arrangement extending along a longitudinal axis between a first end and a second end. The pole arrangement comprises at least a first pole section and a second pole section telescopically arranged to provide length adjustment of the surveying pole. The surveying pole further comprises a target internally arranged in the pole arrangement at a predetermined distance from the first end and a top unit mounted on the pole arrangement at the second end.

The method comprises:
- determining, with an electronic distance measurement (EDM) unit, a distance between said EDM unit and said target, wherein said EDM unit is arranged offset with respect to said longitudinal axis (A) in said top unit such that at least a portion of a light path between said EDM unit and said target does not coincide with said longitudinal axis (A) within said top unit,
- redirecting said light path such that it is parallel with said longitudinal axis within said pole arrangement, and
- determining a length of said pole arrangement based on the determined distance.

The method according to the second aspect may suitably be implemented in a surveying pole according to the first aspect. Accordingly, any advantage described herein in connection to an embodiment of the surveying pole applies equally to the surveying pole of the first aspect and to the method of the second aspect, when implemented in such a surveying pole.

The present inventive concept provides the benefit that an offset position of the EDM unit with respect to the longitudinal axis allows other components present inside the top unit to be arranged closer to the center axis.

Accordingly, by the present inventive concept, the diameter of the top unit may be reduced, compared to a top unit in which the EDM unit is arranged centred with respect to the longitudinal axis. The reduced dimension is advantageous in terms of storage and transport of the surveying pole. As a consequence of the reduced diameter, the weight of the top unit may also be reduced, which is advantageous to the operator of the surveying pole. A further advantage of the reduced weight is to make the top unit more resistant to falls. A higher weight leads to higher energy impact in case of a fall. The potential damage to the top unit and to the components within the top unit in case of a fall is thus reduced by the present inventive concept.

By the present inventive concept, the EDM unit may be arranged within the top unit without increasing the longitudinal dimension, or height, of the top unit. It should be noted that although arranging the EDM unit in line with the center axis and arranging other components within the top unit entirely or partly above the EDM unit would also result in a reduced diameter of the top unit, this would in turn result in a significantly increased longitudinal dimension of the top unit. This may not be desirable, as there may be practical limitations on the longitudinal dimension of the top unit. For example, it may be desirable to allow the top unit to be transported in a case of a particular size.

Yet another advantage of the present inventive concept is that by arranging the EDM unit within the top unit, a conventional, hollow surveying pole arrangement may be used, at least without heavy modification.

In at least one example embodiment, optical arrangement may be adapted to redirect the light path such that it coincides with the longitudinal axis within the pole arrangement.

The positioning device may comprise a reflective element, a light emitting element, and/or a GNSS (Global Navigation Satellite System) antenna, or any combination thereof. The positioning device may be configured to passively cooperate with a geodetic instrument, such as for example a theodolite or a total station. It may be configured to actively cooperate with a geodetic instrument, for example for tracking purposes.

The top unit may comprise further elements, such as tilt sensor, e.g., for determining a tilt angle between the longitudinal axis and the vertical direction.

The top unit may comprise a communication device, e.g., for transmitting the determined length of the pole arrangement to an external unit or instrument. Alternatively, a distance between a point of contact of the surveying pole with the terrain and the positioning device may be calculated based on the determined length and on fixed distances of the surveying pole, such as the distance between the point of contact with the terrain and the target, and the distance between the EDM unit and the positioning device. For example, the determined length, or calculated distance, may be transmitted to a geodetic instrument with which the surveying pole is cooperating. Alternatively, the determined length, or calculated distance, may be transmitted to a separate, optionally mobile, control unit.

The optical arrangement may comprise at least one optical element selected from a group comprising a prism, a mirror, a light guide, and combinations thereof.

A light guide may, for example, comprise optical fibre. In principle, any optical element, or combination of optical elements, adapted to guide light and thus provide the desired light path within the pole arrangement may be used.

This provides freedom for the arrangement of the EDM unit within the top unit.

Said prism may be a triangular prism. For example, said prism may be a right angle prism. Alternatively, said prism may be a rhomboid prism, or a pentaprism.

In at least one example embodiment, the optical arrangement may comprise two prisms. Alternatively, the optical arrangement may comprise two mirrors, or one prism and one mirror.

For example. the optical arrangement may comprise two triangular prisms, or one triangular prism and one mirror.

Prisms have the advantage of being more resistant than mirrors. In particular, prisms may be less prone to damage in case of impact to the top unit, for example due to a fall, or to an external object. A prism also provides better light transmission than a mirror. A mirror may be cheaper to produce than a prism. A mirror may also be significantly lighter than a prism.

The light may be emitted along the light path by a laser of the EDM unit.

The EDM unit may be displaceable to enable adjustment of the light path in the pole arrangement.

The optical arrangement may comprise at least one displaceable element to enable adjustment of the light path in the pole arrangement.

Thus, the light path in the pole arrangement may be adjusted by displacement of the EDM unit and/or displacement of at least one element of the optical arrangement.

This enables calibration of the EDM unit. This is advantageous as it allows the EDM unit to be calibrated in a late stage of the manufacturing or assembly of the top unit. It may reduce the precision with which the EDM unit must be mounted within the top unit, and thereby make the manufacturing or assembly of the top unit less complicated and/or less costly. The desired precision of the instrument can then be obtained in a calibration step. For this purpose, the top unit may be arranged on a calibration bench, and the position of the EDM unit and/or the position of a displaceable element of the optical arrangement may be adjusted to obtain the desired light path for the light emitted by the EDM unit.

An advantage with effecting the adjustment by displacement of an element of the optical arrangement is that it is less bulky. In other words, a displaceable element of the optical arrangement is typically smaller than the EDM unit. Displacing such an element therefore requires less space than displacing the EDM unit. Furthermore, when the adjustment is made by displacement of an element of the optical arrangement, the adjustment system must carry less weight than if it carried the EDM unit. This may make the system more durable.

The optical arrangement may comprise at least one fixed prism having one surface which, when the top unit is mounted on the pole arrangement, faces the interior of the pole arrangement.

Thereby, the light emitted by the EDM unit may exit (or enter, efter being reflected by the target) the top unit directly through the at least one prism. In other words, no further optical element, such as an optical window, is needed to allow the light to exit (or enter) the top unit.

In such an optical arrangement, the at least one fixed prism may be sealingly fixed to the top unit to provide a seal between the interior of the top unit and the interior of the pole arrangement.

Thereby, a protected environment for the components present in the top unit may be created. That is, the light emitted by the EDM unit/reflected by the target is allowed to exit/enter the top unit, while preventing contamination of the interior of the top unit by, for example, dust or other particles.

The top unit may be detachably mounted on the pole arrangement.

This may allow the top unit to be used with different pole arrangements. In particular, such a top unit may easily be transferred between different pole arrangements, depending on the needs of the current application. For example, such a top unit may be mounted on pole arrangements of different heights, stiffness, or other characteristics. Should the pole arrangement be damages, a detachably mounted top unit may be easily switched to a working pole arrangement.

The top unit may comprise a battery for powering said positioning device and said EDM unit. The battery may further power other components present in the top unit. Thus, the top unit, or the components therein, may not need to be powered by an external source of power. In particular, no external power source is needed on or within the pole arrangement.

### Brief description of the drawings

Aspects of the present inventive concept, including its particular features and further advantages, will now be described with reference to the drawings, in which:
- Figure 1: illustrates a typical scene of a surveying pole according to the present inventive concept in use,
- Figures 2a & 2b: schematically illustrate a pole arrangement of an embodiment of the surveying pole,
- Figure 3: schematically illustrates in more detail the top unit of the surveying pole of Fig. 1,
- Figures 4a-c: schematically illustrate alternative configurations of the optical arrangement, and
- Figure 5: is a flow chart illustrating a method according to the present inventive concept.

### Detailed description

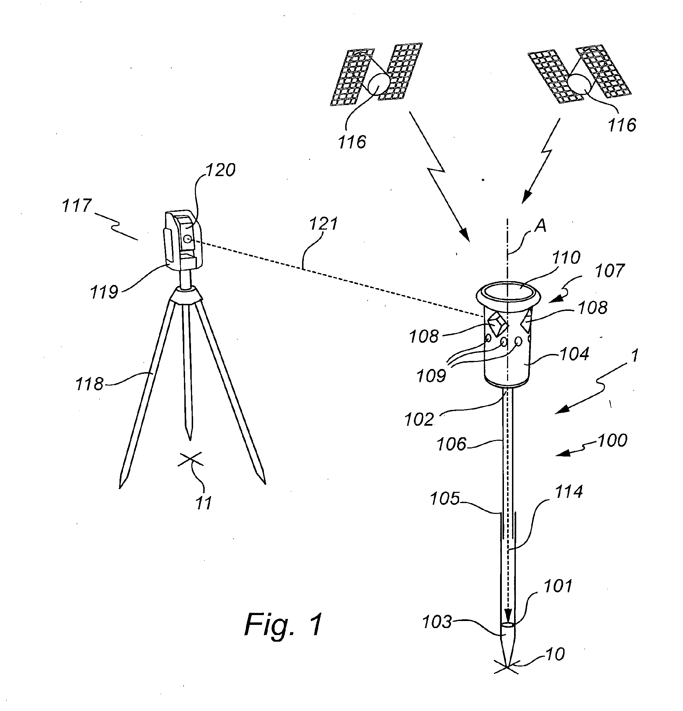

A typical scene of a surveying pole 1 according to the present inventive concept in use is illustrated in Fig. 1. The surveying pole 1 is used to determine the three-dimensional position of a point of interest 10.

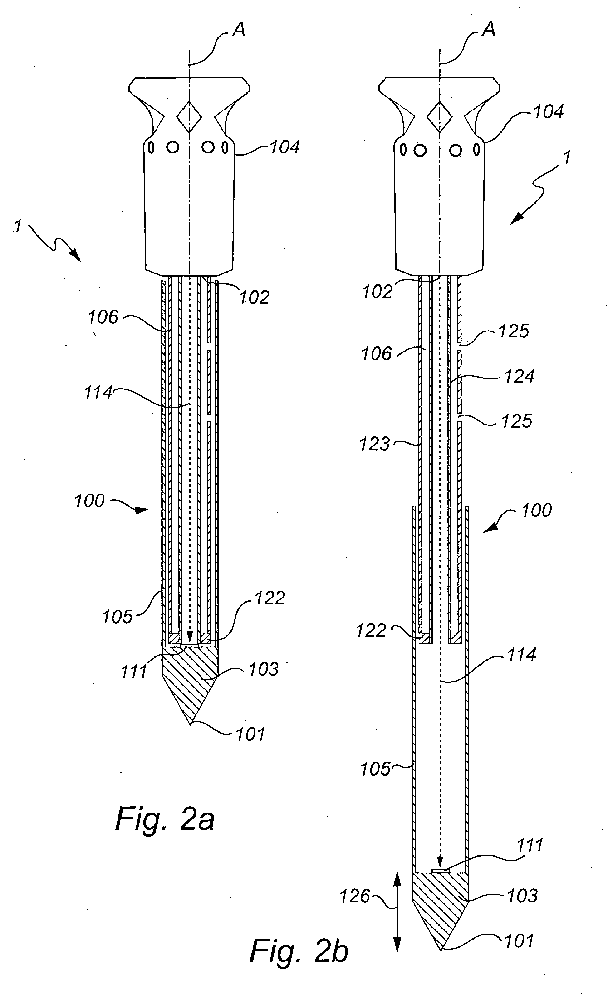

The surveying pole 1 comprises a pole arrangement 100 extending along a longitudinal axis A between a first end 101 and a second end 102. As illustrated, the pole arrangement 100 comprises a first pole section 105 and a second pole section 106 telescopically arranged to provide length adjustment of the surveying pole 1. A target 111 (not visible in Fig. 1) is internally arranged in the pole arrangement 100. The pole arrangement will be described in further detail in connection to Fig. 2.

A top unit 104 is mounted on the pole arrangement 100 at the second end 102 and extends along the longitudinal axis A. The top unit 104 comprises a positioning device 107, which positioning device may comprise reflective elements 108, light emitting elements 109, and/or a GNSS (Global Navigation Satellite System) antenna 110.

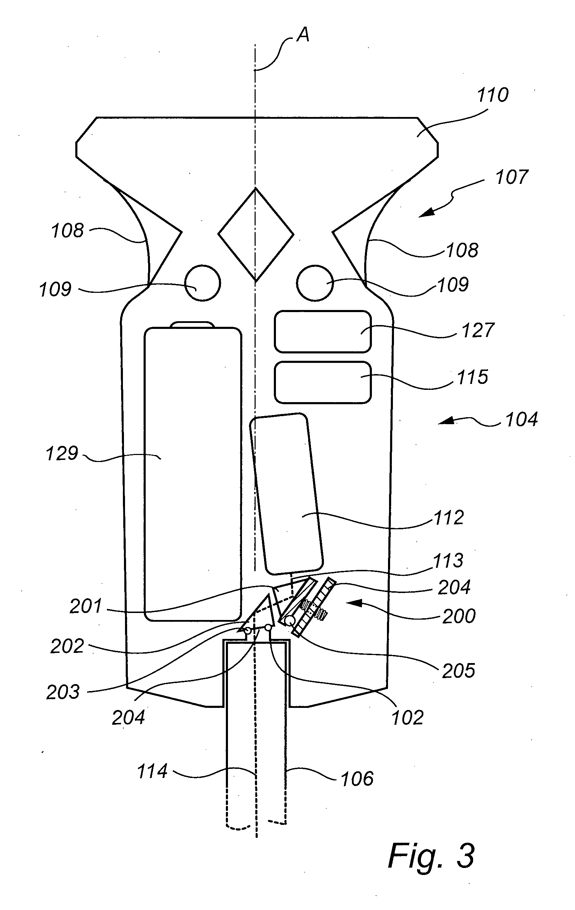

The top unit 104 further comprises an electronic distance measurement (EDM) unit 112 (not visible in Fig. 1) configured to determine a distance to the target 111. As will be more readily apparent in Fig. 3, the EDM unit 112 is arranged offset with respect to the longitudinal axis A such that a portion 113 of a light path 114 between the EDM unit 112 and the target does not coincide with the longitudinal axis A in the top unit 104.

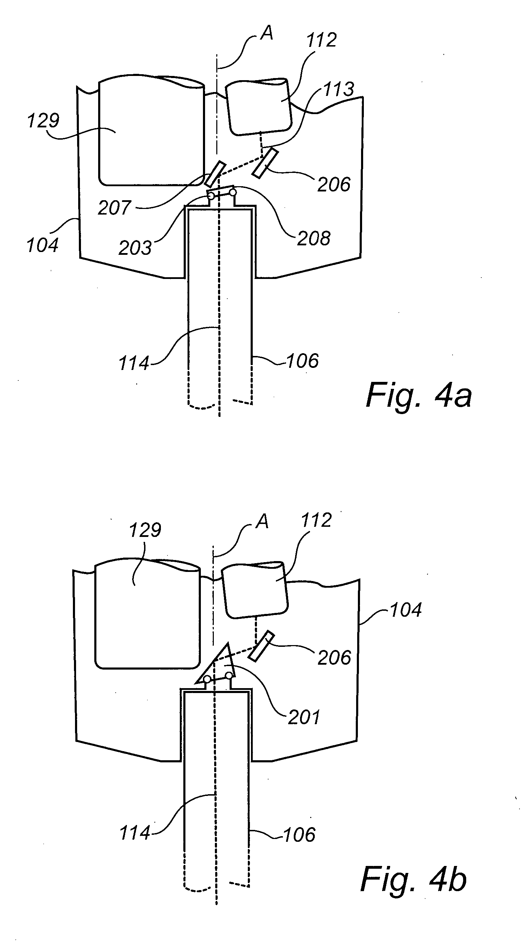

The top unit 104 further comprises and optical arrangement 200 (not visible in Fig. 1) arranged between the EDM unit 112 and the second end 102 of the pole arrangement 100. The optical arrangement 200 is adapted to redirect the light path 114 such that it is parallel with the longitudinal axis A within the pole arrangement. An example of an optical arrangement 200 is shown in Fig. 3, with alternative configurations of the optical arrangement 200 shown in Figs. 4a-c.

The surveying pole 1 further comprises a processor 115 configured to determine the length of the pole arrangement 100 based on the distance determined by the EDM unit 112. In the present example, the processor 115 is illustrated as being arranged within the top unit 104.

A pointing tip 103 is mounted at the first end 101 of the pole arrangement 100. In use of the surveying pole 1, when making a measurement on a point of interest 10 on the terrain or on a structure, the pointing tip 103 is placed on the point of interest 10. Typically, the surveying pole 1 is held in a vertical position during a measurement. Accordingly, the pointing tip 103 is the lowest part of the surveying pole 1 while in use, whereas the top unit 104 is at the highest part of the surveying pole 1. In the following, when referring to the surveying pole 1, parts thereof and/or elements comprised therein, expressions such as *above, higher, below, lower,* etc., should be interpreted as referring to the surveying pole 1 when in a typical in-use position, as described above. More precisely, such expressions should be interpreted so that, when the surveying pole 1 is in use, an element which is *above* or *higher* than another element is closer to the sky along the longitudinal axis A than that element; conversely, an element which is *below* or *lower* than another element is closer to the point of interest 10 along the longitudinal axis A than that element.

A first step in determining the position of the point of interest 10 is to determine the position of the positioning device 107.

In the example of Fig. 1, the position of the positioning device 107 may be determined in cooperation with a geodetic instrument, here illustrated as a total station 117 mounted on a tripod 118 and positioned above a point of reference 11. The total station 117 comprises an alidade 119 rotatable about a first axis (not shown) and a center unit 120 rotatable about a second axis (not shown). Typically, the total station is set up so that, in use, the first and second axes are vertical and horizontal, respectively. The first and second axes intersect within the center unit 120 such that a sighting axis 121 of the total station 117 is rotatable about the intersection point of the axes. The center unit 120 may comprise one or more measurement device, such as an EDM unit. Furthermore, the center unit 120 may comprise one or more sensors, such as camera and/or a light detector, as well as a control unit for controlling the measurement devices and sensors. The total station 117 is equipped with sensors, such angle sensors and/or accelerometers or inertial measurement units, for determining the orientation of the sighting axis 121.

The point of reference 11 may have a known position, e.g., in a common reference frame. In order to determine the position of the point of interest 10 in relation to the point of reference 11, the EDM unit of the center unit 120 may for example measure the distance between the positioning device 107 of the surveying pole 1 and the total station 117 based on light emitted towards the positioning device 107 by the EDM unit and reflected back towards the total station 117 by a reflective element 108 of the positioning device 107. The position of the positioning device 107 may then be derived based on the measured distance and the orientation of the sighting axis 121.

Alternatively, or additionally, the GNSS antenna 110, or receiver, may receive positioning data from a GNSS, illustrated by a plurality of satellites 116.

Knowing the position of the positioning device 107, the position of the point of interest may then be derived based on the distance between the positioning device and the point of interest 10, i.e. the distance between the positioning device 107 and (the tip of) the pointing tip 103. For this purpose, an accurate measurement of the length of the pole arrangement 100 of the surveying pole 1 is needed. Such a measure is provided by the surveying pole 1 according to the present inventive concept, as will be explained in further detail below.

It should be noted that in the scene depicted in Fig. 1, the sighting axis 121 of the total station 117 is unobstructed between the total station 117 and the positioning device 107 of the surveying pole 1.

There may be situations in which a measurement of a point of interest is needed where there is an obstacle between the total station 117 and the positioning device 107. Adjusting the length of the surveying pole 1 to move the positioning device 107 higher up may then provide a direct line of sight between the total station 117 and the positioning device 107. Conversely, adjusting the length of the surveying pole 1 to a shorter length may be desirable, for example, if an object above the point of interest (a branch of a tree, or part of a structure such as a roof, for instance) is preventing the surveying pole from being positioned on the point of interest. In general, a surveying pole 1 having an adjustable length provides improved flexibility in terms of positioning, and improved handling for the operator of the surveying pole 1.

The pole arrangement 100 of the surveying pole 1 is schematically shown in greater detail in Figs. 2a and 2b, where Fig. 2a shows the pole arrangement 100 in a retracted position (the pole arrangement 100 is shorter) and Fig. 2b shows the pole arrangement in an expanded position (the pole arrangement 100 is longer). In Figs. 2a and 2b, the proportions of different elements of the surveying pole 1 and in particular of the pole arrangement 100 are exaggerated for clarity of the figures. Thus, the surveying pole 1 in Figs. 2a and 2b is not shown to scale.

Shown in Figs. 2a and 2b is thus the surveying pole 1 with the top unit 104 mounted on the pole arrangement 100. In the present example, the pole arrangement 100 comprises two pole sections 105, 106 telescopically arranged to provide length adjustment to the surveying pole: a first pole section 105 comprising the first end of the pole arrangement 100 and a second pole section 106 comprising the second end 102 of the pole arrangement 100. As illustrated by the different positions of the second pole section 106 in Figs. 2a and 2b, the second pole section 106 is telescopically movable within the first pole section 105. In other words, the cross section of the second pole section 106 is smaller than the cross section of the first pole section 105, such that the second pole section 106 may radially fit inside of the first pole section 105. A different arrangement, e.g. one in which the second pole section 106 has a larger cross section than the first pole section 105, and the first pole section 105 is telescopically movable within the second pole section 106. A pole arrangement 100 having more than two pole sections is also conceivable.

The respective pole sections 105, 106 may be made of aluminium, which offers a good balance between stiffness, weight, and ease of manufacturing.

The second pole section 106 is here illustrated as being double walled, i.e., the second pole section 106 comprises an outer tube 123 and an inner tube 124. The second pole section 106 may be manufactured as a single component, for example by extrusion.

A ring 122 is mounted at the lower end of the second pole section 106.

As illustrated in Figs. 2a and 2b, the outer tube 123 of the second pole section 106 may optionally have a plurality of holes or openings 125 adapted to receive a fixation means, such as a locking pin (not shown) for locking the position of the pole sections, so that the positioning of the pole sections 105, 106 relative to each other is fixed. The first pole section 105 may comprise corresponding holes or openings for the same purpose (not shown). When using locking pins, care should be taken not to obstruct the light path 114, which would prevent the EDM unit from performing the desired measurement. In particular, it may not be appropriate to use a locking pin traversing the entire diameter of the first 105 and/or second 106 pole section. Fixing the relative position of the pole sections 105, 106 may alternatively be achieved by a friction mechanism. Different alternatives to enable fixing the telescopic pole sections 105, 106 at a desired position will be familiar to the person skilled in the art.

A pointing tip 103, for placing in contact with the point of interest to be measured, is mounted at the first end 101 of the first pole section 105.

In the present example, the target 111 is arranged in the first pole section 105, near the first end 101 and above the pointing tip 103. Different placements of the target 111 are possible, as long as the placement of the target 111 does not prevent length adjustment of the surveying pole (i.e. it does not impede the telescopic displacement of the second pole section 106) and as long as the distance between the target 111 and the first end 101 does not vary when adjusting the length of the surveying pole. The target 111 is positioned at a distance 126, in the longitudinal direction, from the first end 101 and thus at a distance from (the tip of) the pointing tip 103. The distance 126 may for example be 5 cm to 45 cm, or 10 cm to 40 cm, or 15 cm to 35 cm. In particular, the distance 126 may be 30 cm. This may ensure that the target is above water level during measurement in most cases.

The light path 114, within the pole arrangement 100, between the EDM unit 112 and the target 111 is also shown in Figs. 2a and 2b. As described above, the light path 114 is parallel with the longitudinal axis A within the pole arrangement 100. In particular, the light path 114 may coincide with the longitudinal axis 114 within the pole arrangement 100, as shown in the figures.

The top unit 104 may be mounted on the pole arrangement 100 by any suitable fastening means, for example comprising screws, bolts, threads, etc (not shown in the figure). In particular, the top unit 104 may be detachably mounted on the pole arrangement.

The schematic illustration of Fig. 3 shows the top unit 104 in more detail.

The top unit 104 shown in Fig. 3 comprises all the elements of the top unit 104 described in connection to Fig. 1, i.e. the positioning device 107, the EDM unit 112, the processor 115, and the optical arrangement 200. In addition, the top unit 104 comprises a power source or battery 129 for powering the components arranged within the top unit 104. The top unit 104 further comprises a communication device 127, which communication device 127 may be configured to transmit the determined length of the pole arrangement 100, or a calculated distance between the pointing tip 103 and the positioning device 107, to an external unit or instrument. For example, in a scenario as depicted in Fig. 1, the communication device 127 may be configured to transmit a determined or calculated length to the total station 117.

The top unit 104 is mounted on the pole arrangement 100. In Fig. 3, only the second pole section 106 and the second end 102 of the pole arrangement 100 are shown.

As is clearly shown in Fig. 3, the EDM unit 112 is arranged offset with respect to the longitudinal axis A. Thus, the EDM unit 112 emits light along a light path which, within the top unit 104, has a portion 113 that does not coincide with the longitudinal axis A. The optical arrangement 200 is arranged between the EDM unit 112 and the second end 102 of the pole arrangement 100 and is configured to redirect the light path 114 such that it is parallel with the longitudinal axis A within the pole arrangement 100. In particular, the light path 114 may coincide with the longitudinal axis A as illustrated here.

In the present example, the optical arrangement 200 comprises a first 201 and a second 202 right-angle, triangular prism. Thus, light emitted by the EDM unit 112 first enters the first prism 201, whereby the light path 114 is redirected towards the second prism 202, which in turn redirects the light path 114 such that it is parallel with the longitudinal axis A within the pole arrangement 100.

The second prism 202 is fixed within the top unit 104. The second prism 202 is further arranged with a surface 204 which, when the top unit 104 is mounted on the pole arrangement 100, faces the interior of the pole arrangement 100. In other words, the second prism 202 provides an exit from, an entrance to, the top unit 104 for the light path 114. Furthermore, the second prism 202 is sealingly fixed to the top unit 104 to provide a seal between the interior of the top unit 104 and the interior of the pole arrangement 100. In particular, the seal is provided by a ring 203.

Adjustment of the light path 114 is provided by displacement of the first prism 201. In particular, the first prism 201 may be mounted on a support structure 204, the orientation of which is adjustable. For example, the orientation of the support structure 204 may be adjustable by means of adjustment screws 205. In an alternative not shown in the figures, adjustment of the light path 114 may instead be provided by displacement of the EDM unit.

With reference to Figs. 2 and 3, the distance between the EDM unit 112 and the target 111 is determined by the EDM unit 112. For this purpose, the EDM unit 112 emits light a light beam, typically by a laser of the EDM unit 112, along the light path 114. As described above, a first portion 113 of the light path 114 (within the top unit) does not coincide with the longitudinal axis A. The optical arrangement 200 redirects the light path 114 such that it is parallel to the longitudinal axis A within the pole arrangement 100. When the light beam reaches the target 111, it is reflected back towards the EDM unit 112 along the same light path 114. The EDM unit 112 then calculates the distance between the EDM unit 112 and the target 111 based on the time of travel of the light beam from the EDM unit 112 to the target 111 and back to the EDM unit 112. Knowing some fixed lengths of the surveying pole 1, for example the distance between the EDM unit 112 and the positioning device 107, and the distance between the target 111 and the pointing tip 103, the distance between the pointing tip 103 and the positioning device 107 can be derived.

The optical arrangement 200 may, instead of two prisms 201, 202 comprise two mirrors 206, 207, as shown in Fig. 4a. In this case, the orientation of one or both of mirrors 206, 207 may be adjustable to provide adjustment of the light path 114. The mechanism for displacing the mirror 206 and/or 207 may be similar to the one described above for displacing the first prism 201. No support structure or adjustment mechanism for the mirrors 206, 207 is however shown in the figure. In the configuration of Fig. 4a, a seal between the interior of the top unit 104 and the interior of the pole arrangement 100 is provided by an optical window and a ring 203.

A further alternative arrangement of the optical arrangement 200 is shown in Fig. 4b. This alternative combines a fixed right-angle prism 201, as in Fig. 3, and a mirror 206, as in Fig. 4a. Adjustment of the light path 114 is advantageously provided by displacement of the mirror 206.

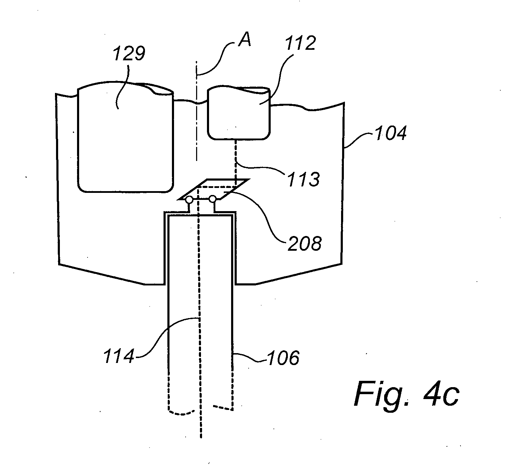

Yet another alternative arrangement is shown in Fig. 4c. In this example, the optical arrangement 200 comprises a fixed rhomboid prism 208. Adjustment of the light path 114 is provided by displacement of the EDM unit 112. For example, the EDM unit 112 may be mounted on a support structure having comprising means for adjustment similar to what is described in relation to Fig. 3 for the first prism. No support structure or means for adjustment are however shown in Fig. 4c.

As apparent in the figures and described above, the EDM unit is arranged offset with respect to the longitudinal axis A. Note that the EDM 112 unit may be arranged such that a portion 113 of the light path 114 within the top unit 104 is not parallel with the longitudinal axis A, such as for example in the configurations of Fig. 3 and Figs. 4a and 4b. The EDM unit 112 may also be arranged such that a portion 113 of the light path 114 within the top unit 104 is generally parallel to the longitudinal axis A. In this respect, the chosen arrangement of the EDM unit 112, and the resulting orientation of the portion 113 of the light path 114 within the top unit 104, may depend on the chosen configuration of the optical arrangement 200 (or vice versa).

Further alternatives of the optical arrangement 200 are possible, although not shown in the figures. For example, a pentaprism may be used. More generally, the optical arrangement 200 may comprise any type of light guide. For example, optical fibre may also be used to guide the light path 114 within the top unit 104.

It is envisioned that, no matter which configuration is chosen for the optical arrangement, adjusting the light path 114 is performed as a calibration operation, either as a step during manufacturing/assembly of the top unit 104, or during a service of the surveying pole. Adjusting the light path 114, for example by manipulating adjustment screws as described above, is thus done by trained personnel in a controlled environment.

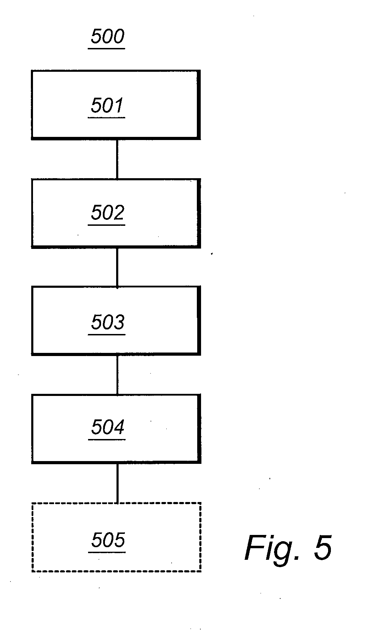

With reference to Fig. 5, a method 500 according to an aspect of the present inventive concept will now be described. The method is implemented in a surveying pole 1 as described above.

At step 501, the EDM unit 112 emits a light beam along a first portion 113 of a light path 114, such that the first portion 113 does not coincide with the longitudinal axis A.

At step 502, the optical arrangement 200 redirects the light path 114 such that it is parallel with the longitudinal axis A within the pole arrangement.

The light beam reaches the target 111 and is subsequently reflected back toward the EDM unit 112 along the light path 114.

At step 503, the EDM unit 112 determines the distance between the EDM unit 112 and the target 111, for example based on the travel time of the light beam emitted by the EDM unit 112.

At step 504, the processor 115 determines a length of the pole arrangement 100 based on the distance between the EDM unit 112 and the target 111 determined by the EDM unit 112.

In an optional step 505, the determined length of the pole arrangement 100, or a distance between the pointing tip 103 and the positioning device 107 derived therefrom, is transmitted to an external unit or instrument, such as for example an optionally mobile control unit, or a total station 117 cooperating with the surveying pole 1.

The method could also be summarized as having a step of determining, with the EDM unit 112, the distance between the EDM unit 112 and the target 111, wherein the EDM unit 112 is arranged offset with respect to the longitudinal axis A in the top unit 104 such that at least a portion 113 of a light path 114 between the EDM unit 104 and the target 111 does not coincide with the longitudinal axis A within the top unit 104. For this purpose, the method also comprises a step of redirecting the light path 114 such that it is parallel with the longitudinal axis A within the pole arrangement 100. The method further comprises a step of determining, in particular by the processor 115, a length of the pole arrangement based on the distance determined by the EDM unit 112.

Although features and elements are described above in particular combinations, each feature or element may be used alone without the other features and elements, or in various combinations with or without other features and elements.

Additionally, variations to the disclosed embodiments can be understood and effected by the skilled person in practicing the claimed invention, from a study of the drawings, the disclosure, and the appended claims. In the claims, the word "comprising" does not exclude other elements, and the indefinite article "a" or "an" does not exclude a plurality.

## Claims

1. A surveying pole comprising:
a pole arrangement extending along a longitudinal axis (A) between a first end and a second end, said pole arrangement comprising at least a first pole section and a second pole section telescopically arranged to provide length adjustment of said surveying pole,
a target internally arranged in said pole arrangement at a predetermined distance from said first end,
a top unit mounted on said pole arrangement at said second end and extending along said longitudinal axis (A), said top unit comprising:
a positioning device,
an electronic distance measurement (EDM) unit being configured to determine a distance to said target, wherein said EDM unit is arranged offset with respect to said longitudinal axis (A) such that at least a portion of a light path between said EDM unit and said target does not coincide with said longitudinal axis (A) within said top unit, and
an optical arrangement arranged between said EDM unit and said second end of said pole arrangement, which optical arrangement is adapted to redirect said light path such that it is parallel with said longitudinal axis within said pole arrangement,
and
a processor configured to determine a length of the pole arrangement based on the distance determined by the EDM unit.

2. The surveying pole according to claim 1, wherein said optical arrangement comprises at least one optical element selected from a group comprising a prism, a mirror, a light guide, and combinations thereof.

3. The surveying pole according to claim 2, wherein said prism is a triangular prism, a rhomboid prism, or a pentaprism.

4. The surveying pole according to claim 2, wherein said optical arrangement comprises two prisms, or two mirrors, or one prism and one mirror.

5. The surveying pole according to any one of the preceding claims, wherein ligth is emitted along said light path by a laser of said EDM unit.

6. The surveying pole according to any one of the preceding claims, wherein said EDM unit is displaceable to enable adjustment of the light path in said pole arrangement.

7. The surveying pole according to any one of the preceding claims, wherein said optical arrangement comprises at least one displaceable element to enable adjustment of the ligth path in said pole arrangement.

8. The surveying pole according to any one of the preceding claims, wherein said optical arrangement comprises at least one fixed prism having one surface which, when said top unit is mounted on said pole arrangement, faces the interior of said pole arrangement.

9. The surveying pole according to claim 8, wherein said at least one fixed prism is sealingly fixed to said top unit to provide a seal between the interior of said top unit and the interior of said pole arrangement.

10. The surveying pole according to any one of the preceding claims, wherein said top unit is detachably mounted on said pole arrangement.

11. The surveying pole according to any one of the preceding claims, wherein said top unit comprises a battery for powering said positioning device and said EDM unit.

12. A method implemented in a surveying pole comprising a pole arrangement extending along a longitudinal axis (A) between a first end and a second end, said pole arrangement comprising at least a first pole section and a second pole section telescopically arranged to provide length adjustment of said surveying pole, a target internally arranged in said pole arrangement at a predetermined distance from said first end, and a top unit mounted on said pole arrangement at said second end,
the method comprising:
determining, with an electronic distance measurement (EDM) unit, a distance between said EDM unit and said target, wherein said EDM unit is arranged offset with respect to said longitudinal axis (A) in said top unit such that at least a portion of a light path between said EDM unit and said target does not coincide with said longitudinal axis (A) within said top unit,
redirecting said light path such that it is parallel with said longitudinal axis (A) within said pole arrangement, and
determining a length of said pole arrangement based on the determined distance.
